# FASCICULE DE BREVET EUROPEEN

(11) **EP 0 960 300 B1**
(45) Date de publication et mention de la délivrance du brevet: **29.05.2002**
(21) Numéro de dépôt: 98958977.5
(22) Date de dépôt: 08.12.1998
(51) Int. Cl.: F16L 37/084, F16L 33/22

(54) **DISPOSITIF DE RACCORDEMENT RAPIDE D'UN TUBE A UN ELEMENT RIGIDE A BAGUE ANTI-EXTRACTION ET TEMOIN D'INTEGRITE**
VORRICHTUNG ZUM SCHNELLEN VERBINDEN EINES ROHRES MIT EINEM STARREN ELEMENT MIT TRENNSICHERUNGSRING UND ZUSTANDSANZEIGER
DEVICE FOR FAST CONNECTION OF A TUBE TO A RIGID ELEMENT WITH ANTI-EXTRACTION RING AND SAFETY SEAL

(30) Priorité: 11.12.1997 FR 9715721
(43) Date de publication de la demande: 01.12.1999
(73) Titulaire: LEGRIS S.A., F-35000 Rennes (FR)
(72) Inventeur: CAMBOT-COURRAU, Yves, F-35235 Thorigne-Fouillard (FR)
(74) Mandataire: Robert, Jean-Pierre
(86) Numéro de dépôt international: FR9802654
(87) Numéro de publication internationale: WO9930071

(56) Documents cités:
- EP-A- 0 160 559
- EP-A- 0 616 161

## Description

La présente invention concerne un dispositif de raccordement rapide d'un tube à un élément rigide (par exemple un *corps* de composant pneumatique tel qu'un distributeur, un vérin, etc.) et plus particulièrement un dispositif de raccordement rapide du type "cartouche" destiné à réaliser l'ancrage d'un tube dans un alésage de l'élément rigide ainsi que l'étanchéité du raccord formé.

On connaît des dispositifs de raccordement rapide du type "cartouche" destiné à réaliser la connexion étanche d'un tube dans un alésage d'un élément rigide se présentant sous la forme d'un insert tubulaire comportant un corps tubulaire possédant des moyens pour son ancrage permanent dans l'élément rigide et des moyens de retenue du tube, comme, par exemple divulgée dans le document EP-A-0 616 161.

Les moyens de retenue du tube sont souvent réalisés sous la forme d'une rondelle à denture intérieure dont les dents sont soulevées par flexion lors de l'introduction du tube et tendent à mordre le tube pour s'opposer à son extraction. Lorsque l'on souhaite autoriser la déconnexion ultérieure du tube, on dispose entre le tube et le corps un poussoir coulissant qui permet de soulever les dents pour libérer le tube.

Toutefois, on constate en pratique un risque d'enfoncement accidentel du *poussoir* qui provoque ainsi de façon intempestive la déconnexion du tube. Une telle déconnexion accidentelle peut avoir des conséquences graves dans la mesure où elle conduit non seulement à l'apparition de fuites importantes mais également à la mise hors service du composant pneumatique alimenté par l'intermédiaire du raccord.

Améliorer la sécurité des dispositifs de raccordement du type précité en prévenant l'enfoncement accidentel du poussoir d'épanouissement de la rondelle de retenue est connu du document JP.A. 9-42562.

L'invention est un perfectionnement à ce dispositif. Ainsi, on prévoit selon l'invention un dispositif de raccordement rapide d'un tube à un élément rigide alésé, comportant un insert tubulaire possédant des moyens de son ancrage dans l'alésage de l'élément rigide, des moyens débrayables de retenue du tube, et un poussoir monté mobile en translation dans l'insert tubulaire pour provoquer le débrayage des moyens de retenue lors de son enfoncement dans l'insert tubulaire, possèdant une partie arrière qui fait saillie à l'extérieur de l'insert tubulaire et qui présente une surface d'épaulement située en regard d'une surface d'extrémité de l'insert tubulaire et délimitant avec cette surface d'extrémité une gorge dans laquelle est reçue une bague intercalaire amovible s'opposant à l'enfoncement du poussoir de débrayage, cette bague intercalaire étant fermée et présentant une portion de résistance mécanique amoindrie formant une amorce de rupture qui, lorsqu'elle est rompue, permet le dégagement de ladite bague.

La rupture de la bague témoigne alors d'un dégagement de celle-ci pour procéder à la déconnexion du tube. L'intégrité de l'amorce de rupture de la bague témoigne donc de celle du dispositif. En particulier, une intervention non autorisée sur le dispositif de raccordement peut ainsi être décelée.

De préférence, la bague intercalaire amovible possède un pourtour externe pourvu d'une patte de traction. Le dégagement de la bague intercalaire amovible est ainsi facilité.

Avantageusement alors, une fente traverse l'épaisseur de la patte de traction de la bague intercalaire amovible. Un outil peut alors être inséré dans la fente afin de faciliter encore le dégagement de la bague intercalaire amovible.

Selon une caractéristique additionnelle de l'invention, la bague intercalaire amovible possède deux branches qui, après rupture de la portion de résistance mécanique amoindrie, peuvent être écartées élastiquement l'une de l'autre et qui sont agencées pour s'encliqueter autour du poussoir de débrayage. Ainsi, après que la bague intercalaire amovible a été retirée pour permettre une déconnexion du tube, elle peut être remise en position autour du poussoir de débrayage par simple déformation élastique, sans l'aide d'outil particulier.

Il sera fait référence aux dessins annexés, parmi lesquels :
- la figure 1 est une vue en coupe longitudinale d'un dispositif de raccordement rapide selon l'invention inséré dans un élément rigide ;
- la figure 2 est une vue de dessus de la bague intercalaire amovible.

En référence aux figures, le dispositif de raccordement rapide d'un tube à un élément rigide 50 comporte un insert tubulaire 1 destiné à venir se loger dans un alésage 51 de l'élément rigide 50.

L'insert 1 comporte ici deux parties : un corps tubulaire 3 et, à l'avant de ce corps 3 par référence au sens d'insertion de l'insert 1 dans l'alésage 51, un nez 5. La face extérieure du corps 3 est équipée d'aspérités 7 en forme de dents de sapin pour son ancrage dans l'alésage 51.

Le corps 3 et le nez 5 définissent entre eux une gorge 9 qui constitue un logement pour une rondelle 11 pourvue de dents d'accrochage et de retenue du tube. La rondelle 11, connue en elle-même, est élastiquement déformable et sensiblement tronconique vers l'avant, c'est-à-dire vers l'intérieur de l'alésage 51. Sa circonférence intérieure est de diamètre inférieur à celui du tube qu'elle peut ainsi "mordre" et retenir contre un effort d'extraction.

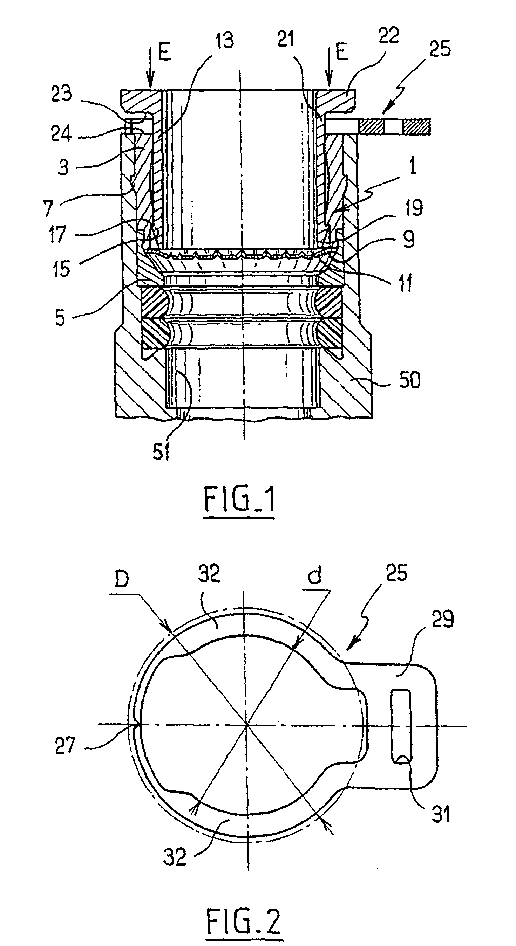

Un poussoir de débrayage 13, tubulaire, est monté pour coulisser axialement à l'intérieur du corps 3 de l'insert 1. Ce poussoir est ainsi mobile entre une position arrière inactive et une position avant active. Dans sa position arrière, qui est celle illustrée par la figure 1, le poussoir 13 est en butée par un épaulement 15 contre un épaulement 17 de la partie 3. La rondelle 11 est alors simplement susceptible de venir en butée contre l'extrémité avant 19 du poussoir 13, afin d'éviter le retournement de la rondelle 11 vers l'arrière en cas d'effort d'extraction élevé du tube raccordé. Dans sa position avant, le poussoir 13 est enfoncé vers l'avant, c'est-à-dire vers l'intérieur de l'alésage 51, comme symbolisé par les flèches E de la figure 1. Les épaulements 15 et 17 sont alors espacés l'un de l'autre et l'extrémité 19 du poussoir 13 pousse et soulève les dents de la rondelle 11 pour épanouir cette rondelle et libérer ainsi le tube avec lequel elle était en prise. Le poussoir de débrayage 13 a un diamètre intérieur légèrement supérieur à celui du tube à raccorder.

Le poussoir de débrayage 13 possède une partie d'extrémité arrière 21 qui fait saillie de la face d'extrémité arrière 24 du corps tubulaire 3. Cette partie en saillie 21 possède une collerette 22 qui présente une surface d'épaulement 23 tournée vers la face arrière 24 du corps 3 de l'insert tubulaire 1.

Une bague intercalaire amovible 25, fermée et en matériau élastiquement déformable, s'étend autour du poussoir de débrayage 13 entre la surface d'épaulement 23 et la face d'extrémité 24 du corps tubulaire 3. La bague intercalaire amovible 25 a un diamètre interne d légèrement supérieur au diamètre externe de la partie tubulaire du poussoir de débrayage 13 et inférieur au diamètre D du contour externe de la surface d'épaulement 23 (représenté en traits mixtes à la figure 2).

La bague intercalaire amovible 25 comprend une portion de résistance mécanique amoindrie 27. Cette portion est ici réalisée en diminuant localement la largeur de la bague jusqu'à former un point d'amorce de rupture. On pourrait également imaginer d'affaiblir le matériau constituant la bague.

En outre, la bague intercalaire amovible 25 est pourvue, d'un côté diamétralement opposé à la portion de résistance mécanique amoindrie 27, d'une patte de traction 29 s'étendant latéralement par rapport à la bague intercalaire amovible 25. Une fente 31 traverse l'épaisseur de la patte de traction 29 afin d'en faciliter la manipulation à l'aide d'un outil.

L'installation du dispositif de raccordement rapide sur l'élément rigide 50 débute par l'insertion de l'insert tubulaire 1 dans l'alésage 51 de l'élément rigide 50.

Un tube est ensuite inséré dans le dispositif de raccordement rapide au travers du poussoir de débrayage 13 et déforme les dents de la rondelle 11 qui mordent ainsi sur la surface externe du tube.

Pour libérer le tube, l'utilisateur peut par exemple insérer la lame d'un tournevis dans la fente 31 et par action de levier exerce un effort de traction sur la bague intercalaire amovible. L'effort de traction provoque alors la rupture de la portion 27. La rupture de la portion 27 divise la bague en deux branches 32 qui peuvent s'écarter élastiquement l'une de l'autre pour dégager une ouverture permettant le dégagement transversale de la bague 25. Le poussoir de débrayage 13 peut alors être enfoncé pour provoquer l'épanouissement de la rondelle de retenue et libérer ainsi le tube. La portion rompue révèle donc un enfoncement volontaire du poussoir de débrayage 13.

L'utilisateur peut ensuite s'il le désire reconnecter le tube et remettre la bague intercalaire amovible 25 en position par encliquetage de celle-ci autour de la partie tubulaire du poussoir de débrayage 13.

## Revendications

1. Dispositif de raccordement rapide d'un tube à un élément rigide (50) alésé, comportant un insert tubulaire (1) possédant des moyens (7) de son ancrage dans l'alésage de l'élément rigide (50), des moyens débrayables de retenue (11) du tube, et un poussoir (13) monté mobile en translation dans l'inser tubulaire (1) pour provoquer le débrayage des moyens de retenue (11) lors de son enfoncement dans l'insert tubulaire (1), possèdant une partie arrière qui fait saillie à l'extérieur de l'insert tubulaire (1) et qui présente une surface d'épaulement (23) située en regard d'une surface d'extrémité (24) de l'insert tubulaire (1) et délimitant avec cette surface d'extrémité une gorge dans laquelle est reçue une bague intercalaire amovible (25) s'opposant à l'enfoncement du poussoir de débrayage (13), **caractérisé en ce que** la bague intercalaire amovible (25) est fermée et présente une portion de résistance mécanique amoindrie (27) formant une amorce de rupture qui, lorsqu'elle est rompue, permet le dégagement de ladite bague.

2. Dispositif selon la revendication 1, **caractérisé en ce que** la bague intercalaire amovible (25) possède un pourtour externe pourvu d'une patte de traction (29).

3. Dispositif selon la revendication 2, **caractérisé en ce qu'**une fente (31) traverse l'épaisseur de la patte de traction (29) de la bague intercalaire amovible (25).

4. Dispositif selon la revendication 1, **caractérisé en ce que** la bague intercalaire amovible (25) possède deux branches (32) qui, après rupture de la portion de résistance mécanique amoindrie (27), peuvent être écartées élastiquement l'une de l'autre et qui sont agencées pour s'encliqueter autour du poussoir de débrayage (13).

## Claims

1. A quick-coupling device for coupling a tube to a rigid element (50) having a bore, the device comprising a tubular insert (1) having means (7) enabling it to be anchored in the bore of the rigid element (50), declutchable tube retaining means (11), and a slide (13) mounted to move in translation in the tubular insert (1) to declutch the retaining means (11) when it is pushed into the tubular insert (1), having a rear portion which projects outside the tubular insert (1) and which presents a shoulder surface (23) situated facing an end surface (24) of the tubular insert (1) and co-operating with said end surface to define a groove in which a removable intermediate ring (25) is received to oppose pushing in of the declutching slide (13), **characterized in that** the removable intermediate ring (25) is closed, and has a mechanically weak portion (27) forming a break starter which, once broken, enables said ring to be removed.

2. A device according to claim 1, **characterized in that** the removable intermediate ring (25) has an outline provided with a pull tab (29).

3. A device according to claim 2, **characterized in that** a slot (31) passes through the thickness of the pull tab (29) of the removable intermediate ring (25).

4. A device according to claim 1, **characterized in that** the removable intermediate ring (25) has two branches (32) which, after the weak portion (27) has been broken, can be moved elastically apart from each other, and which are suitable for snap-fastening around the declutching slide (13).

## Patentansprüche

1. Vorrichtung zum schnellen Verbinden eines Rohres mit einem starren, mit einer Bohrung versehenen Element (50) umfassend einen rohrförmigen Einsatz (1) mit einem Mittel (7) zur Verankerung in der Bohrung des starren Elements (50), einem ausrückbaren Rohrhaltemittel (11) und einem Drücker (13), der in dem rohrförmigen Einsatz (1) translatorisch bewegbar ist, um das Ausrücken des Haltemittels (11) auszulösen, wenn er in den rohrförmigen Einsatz (1) gedrückt wird, wobei der Drücker einen hinteren Abschnitt hat, der über das Äußere des rohrförmigen Einsatzes (1) hinaussteht und der eine Anschlagfläche (23) bildet, die gegenüber einer Endfläche (24) des rohrförmigen Einsatzes (1) angeordnet ist und die mit dieser Endfläche eine Nut bildet, in der ein abnehmbarer Zwischenring (25) aufgenommen ist, der das Eindrücken des Ausrück-Drückers (13) verhindert, **dadurch gekennzeichnet, daß** der abnehmbare Zwischenring (25) geschlossen ist und einen Abschnitt (27) geringerer mechanischer Festigkeit hat, der eine Sollbruchstelle bildet, deren Bruch das Entfernen des Ringes ermöglicht.

2. Vorrichtung nach Anspruch 1, **dadurch gekennzeichnet, daß** der abnehmbare Zwischenring (25) einen Außenumfang mit einer Reißlasche (29) hat.

3. Vorrichtung nach Anspruch 2, **dadurch gekennzeichnet, daß** durch die Dikke der Reißlasche (29) des abnehmbaren Zwischenrings (25) ein Spalt (31) verläuft.

4. Vorrichtung nach Anspruch 1, **dadurch gekennzeichnet, daß** der abnehmbare Zwischenring (25) zwei Schenkel (32) hat, die nach dem Bruch des Abschnitts (27) geringerer mechanischer Festigkeit elastisch voneinander abgespreizt werden können und derart angeordnet sind, daß sie um den Ausrück-Drücker (13) herum einrasten können.
